(19) **Europäisches Patentamt / European Patent Office / Office européen des brevets**

(11) **EP 1 801 172 B1**

(12) **EUROPEAN PATENT SPECIFICATION**

(45) Date of publication and mention
of the grant of the patent:
**15.10.2008 Bulletin 2008/42**

(51) Int Cl.:
***C09D 11/00*** *(2006.01)*

(21) Application number: **06026588.1**

(22) Date of filing: **21.12.2006**

(54) **Water-based inks for ink-jet printing**

Tinten auf Wasserbasis für Tintenstrahldruck

Encres a base d'eau pour impression par jet d'encre

(84) Designated Contracting States:
**DE GB**

(30) Priority: **22.12.2005 JP 2005370376**
**22.12.2005 JP 2005370373**

(43) Date of publication of application:
**27.06.2007 Bulletin 2007/26**

(73) Proprietor: **Kao Corporation**
**Chuo-ku**
**Tokyo 103-8210 (JP)**

(72) Inventor: **Nagashima, Shigeki**
**c/o Kao Corporation**
**Wakayama-shi**
**Wakayama (JP)**

(74) Representative: **HOFFMANN EITLE**
**Patent- und Rechtsanwälte**
**Arabellastrasse 4**
**81925 München (DE)**

(56) References cited:
**EP-A1- 1 243 623**     **US-A1- 2003 195 274**
**US-A1- 2004 116 553**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to water-based inks for ink-jet printing and water dispersions used in the water-based inks.

BACKGROUND OF THE INVENTION

In ink-jet printing methods, droplets of ink are directly projected onto a recording medium from very fine nozzles and allowed to adhere to the recording medium, to form characters and image. The ink-jet printing methods have been rapidly spread because of their various advantages such as easiness of full coloration, low costs, capability of using plain paper as the recording medium, non-contact with printed images and characters, etc.
Among such printing methods, in view of enhancing the weather resistance and water resistance of printed images and characters, an ink-jet printing method utilizing an ink containing a pigment as the colorant has now come to dominate (for example, refer to WO 00/39226, JP 2004-75820A, JP 2005-42005A, JP 2005-42098A and JP 2003-231831A).
WO 00/39226 discloses a water-based ink containing a pigment-containing vinyl polymer which is in the form of a graft polymer obtained from a macromer to achieve a high optical density.
JP 2004-76820A discloses an ink containing an acrylic organic polymer compound having a cationic group in a side chain thereof, an acrylic organic polymer compound having an anionic group in a side chain thereof, and acidic carbon black.
JP 2005-42006A discloses an ink formed by dispersing water-insoluble vinyl polymer particles containing carbon black in water in which the carbon black has a DBP oil absorption of 100 mL/100g or higher and the water-insoluble vinyl polymer contains a salt-forming group.
JP 2005-42098A discloses a water-based ink for ink-jet printing containing a water dispersion of water-insoluble vinyl polymer particles containing carbon black in which the carbon black contains volatile components in an amount of 5% or less as measured at 950°C and is composed of two or more kinds of carbon blacks which are different in at least one of a primary particle diameter, a specific surface area and a DBP oil absorption from each other.
JP 2003-231831A discloses a water-based ink using a water dispersion containing particles of a water-insoluble polymer having an acid value of 60 to 200 KOH mg/g and an acid group 30 to 80 mol% of which is neutralized with a base, and carbon black having a pH of 1 to 6 which is contained in the polymer particles.
The conventional water-based inks are improved in image density, etc., to some extent, but are still unsatisfactory, and it is therefore required to further improve these properties.

SUMMARY OF THE INVENTION

The present invention relates to the following aspects [1] to [4]:

[1] A water dispersion for ink-jet printing including particles of a water-insoluble polymer containing carbon black in which the carbon black contains volatile components in an amount of 3% by weight or more and has a specific surface area of less than 200 $m^2/g$, and an amount of the water-insoluble polymer, an amount of the carbon black (CB) and the specific surface area of CB satisfy the relationship represented by the following formula (1):

$$\text{(Amount of CB} \times \text{Specific surface area of CB)/Amount of water-insoluble polymer} = 200 \text{ to } 500 \ (m^2/g) \qquad (1).$$

[2] A water-based ink for ink-jet printing containing the water dispersion described in the above aspect [1].
[3] A water dispersion for ink-jet printing including particles of a water-insoluble polymer containing carbon black in which the carbon black has a specific surface area of not less than 100 $m^2/g$ but less than 200 $m^2/g$, and an amount of the water-insoluble polymer, an amount of the carbon black (CB) and the specific surface area of CB satisfy the relationship represented by the above formula (1).
[4] A water-based ink for ink-jet printing containing the water dispersion described in the above aspect [3].

DETAILED DESCRIPTION OF THE INVENTION

The present invention relates to a water-based ink for ink-jet printing which satisfies not only a high image density but also excellent dryness and high lighter-fastness, and a water dispersion used in the water-based ink.

The inventors have found that a water dispersion of particles of a water-insoluble polymer containing carbon black in which an amount of the water-insoluble polymer, an amount of the carbon black containing a large amount of volatile components and a specific surface area of the carbon black are determined so as to satisfy the specific relationship, can exhibit not only a high image density, but also excellent dryness and high lighter-fastness.

Thus, in accordance with the first preferred embodiment of the present invention, there is provided a water dispersion for ink-jet printing including particles of a water-insoluble polymer containing carbon black in which the carbon black contains volatile components in an amount of 3% by weight or more and has a specific surface area of less than 200 $m^2$/g, and an amount of the water-insoluble polymer, an amount of the carbon black (CB) and the specific surface area of CB satisfy the relationship represented by the following formula (1):

$$\text{(Amount of CB x Specific surface area of CB)/Amount of water-insoluble polymer} = 200 \text{ to } 500 \ (m^2/g) \quad\quad (1).$$

Also, the present invention relates to a water-based ink for ink-jet printing which are excellent in image uniformity, high lighter-fastness and dryness, and a water dispersion used in the water-based ink.

Further, the inventors have found that a water dispersion of particles of a water-insoluble polymer containing carbon black in which an amount of the water-insoluble polymer, an amount of the carbon black and a specific surface area of the carbon black are determined so as to satisfy the specific relationship, can exhibit excellent image uniformity, high lighter-fastness and dryness.

Thus, in accordance with the second preferred embodiment of the present invention, there is provided a water dispersion for ink-jet printing including particles of a water-insoluble polymer containing carbon black in which the carbon black has a specific surface area of not less than 100 $m^2$/g but less than 200 $m^2$/g, and an amount of the water-insoluble polymer, an amount of the carbon black (CB) and the specific surface area of CB satisfy the relationship represented by the above formula (1).

(Carbon Black)

In the present invention, in order to allow the carbon black to be present in the form of stable fine particles in the ink and in view of high lighter-fastness and water resistance, the carbon black is contained in the water-insoluble polymer particles.

The amount of the water-insoluble polymer, the amount of CB and the specific surface area of CB are determined so as to satisfy the relationship represented by the above formula (1). The value given by the formula (1) is an inverse number of the amount of the polymer per unit area of CB. Therefore, the smaller value of the formula (1) indicates that the amount of the polymer per unit area of CB is larger. In the range where the relationship represented by the formula (1) is satisfied, the polymer layer covering the carbon black has an adequate thickness, resulting in excellent image density, dryness and high lighter-fastness.

First Preferred Embodiment

The value given by "(amount of CB x specific surface area of CB)/amount of water-insoluble polymer" is from 200 to 500 $m^2$/g in view of image density, dryness and high lighter-fastness.

The carbon black contains volatile components in an amount of 3% or more and preferably 4% or more in view of image density and image uniformity. The upper limit of the volatile content in the carbon black is 20% or less, preferably 10% or less, more preferably 8% or less, still more preferably from 3 to 20%, further still more preferably from 3 to 10% and further still more preferably from 4 to 8%. The carbon black having a volatile content in the above-specified range is excellent in image density and image uniformity.

The specific surface area of the carbon black (as measured by BET method) is less than 200 $m^2$/g, preferably 190 $m^2$/g or less and more preferably 180 $m^2$/g or less. The lower limit of the specific surface area of the carbon black is preferably 50 $m^2$/g or more, more preferably 70 $m^2$/g or more and still more preferably 100 $m^2$/g or more. Thus, the specific surface area of the carbon black is preferably in the range of not less than 50 $m^2$/g but less than 200 $m^2$/g, more preferably 70 to 190 $m^2$/g and still more preferably 100 to 180 $m^2$/g. The carbon black whose specific surface area lies within the above-specified range allows the polymer layer covering the carbon black to have an adequate thickness even in a small amount thereof, and can exhibit not only excellent dryness and high lighter-fastness, but also excellent image uniformity (hiding property).

The carbon black used in the present invention preferably has a DBP (dibutyl phthalate) oil absorption of 40 to 400 mL/100 g, more preferably 40 to 300 mL/100 g and still more preferably 50 to 200 mL/100 g in view of dryness, high lighter-fastness and image density.

The pH of the carbon black is preferably from 1 to 8, more preferably from 2 to 6 and still more preferably from 2.5 to 5. The average primary particle size of the carbon black is preferably from 10 to 40 nm, more preferably from 10 to 30 nm and still more preferably from 10 to 20 nm.


Second Preferred Embodiment


The value given by "(amount of CB x specific surface area of CB)/amount of water-insoluble polymer" is from 200 to 500 $m^2/g$, preferably from 250 to 500 $m^2/g$ and more preferably from 300 to 500 $m^2/g$ in view of image density, dryness and high lighter-fastness.

The specific surface area of the carbon black (as measured by BET method) is less than 200 $m^2/g$, preferably 190 $m^2/g$ or less and more preferably 180 $m^2/g$ or less. The lower limit of the specific surface area of the carbon black is preferably 100 $m^2/g$ or more, more preferably 105 $m^2/g$ or more and still more preferably 110 $m^2/g$ or more. Thus, the specific surface area of the carbon black is preferably in the range of 100 to 190 $m^2/g$ and more preferably 110 to 180 $m^2/g$. The carbon black whose specific surface area lies within the above-specified range allows the polymer layer covering the carbon black to have an adequate thickness even in a small amount thereof, and can exhibit not only excellent dryness and high lighter-fastness, but also excellent image uniformity (hiding property).

The carbon black used in the present invention preferably has a DBP (dibutyl phthalate) oil absorption of 80 to 400 mL/100 g, more preferably 85 to 300 mL/100 g and still more preferably 90 to 200 mL/100 g in view of optical density. The carbon black whose oil absorption lies within the above-specified range has a high bulkiness and readily remains attached onto a surface of a printed paper, resulting in excellent image density as well as excellent dispersion stability of the water-insoluble polymer particles containing the carbon black.

The carbon black contains volatile components in an amount of less than 3% and preferably 2.5% or less. The lower limit of the volatile content in the carbon black is preferably 0.1% or more. The carbon black having a volatile content in the above-specified range contains a relatively small amount of volatile components such as hydroxyl group and carboxyl group, resulting in excellent dispersion stability of the water-insoluble polymer particles containing the carbon black.

The pH of the carbon black is preferably from 6 to 11, more preferably from 7 to 10 and still more preferably from 8 to 9.5 in view of dispersion stability. The average primary particle size of the carbon black is preferably from 10 to 40 nm, more preferably from 10 to 30 nm and still more preferably from 10 to 20 nm.

The above properties of the carbon black may be measured as follows. The amount of the volatile components in the carbon black is determined from a residual weight of the carbon black after heating the carbon black at 950˚C for 7 min(according to ASTM D1620-60); the specific surface area and the DBP oil absorption of the carbon black are determined according to ASTM D-3037-81 and ASTM D2414-65-T, respectively; and the pH of the carbon black is determined as a pH value of a water suspension of the carbon black which is measured using a glass electrode according to DIN ISO 787/9. The average primary particle size of the carbon black is an average diameter (a number-average particle size of 100 particles) calculated from particle sizes measured by an electron microscope, and if the carbon black has a major axis diameter and a minor axis diameter, the major axis diameter thereof is measured.

Examples of the carbon black include furnace black (including high-color furnace black and medium-color furnace black), thermal lamp black, acetylene black and channel black. The carbon black may be oxidized by a gas-phase or liquid-phase oxidation method using an oxidizing agent such as ozone, nitric acid, hydrogen peroxide and nitrogen oxide, or a surface-modifying method such as plasma treatment.

Specific examples of commercially available carbon blacks usable in the first preferred embodiment of the present invention include "MONARCH 1000" series, "REGAL 400R" series and "MOGUL L" all available from Cabot Corp.; "Special Black 550", "Special Black 350", "Special Black 250" and "Special Black 100" series, "Color Black FW1", "Color Black S160", "Color Black 5", "Color Black 4", "Color Black 150T", "Color Black 140T", "Color Black U" series and "Color Black V" series all available from Degusa AG.; and "#2359", "#2200B", "#1000" and "#970" series all available from Mitsubishi Chemical Corp.

Among these commercially available carbon blacks, especially preferred are "MOGUL L" (specific surface area: 138; DBP oil absorption: 66; volatile content: 4.5) and "REGAL 400R" (specific surface area: 96; DBP oil absorption: 69; volatile content: 3.5) both available from Cabot Corp.; and "Color Black S160" (specific surface area: 150; oil absorption: 150; volatile content: 5.0) available from Degusa AG.

Specific examples of commercially available carbon blacks usable in the second preferred embodiment of the present invention include "MONARCH 280", MONARCH 460", MONARCH 800" series, "ELFTEX 8", "VULCAN P" series, "VULCAN 9A32" and "VULCAN XC72" series all available from Cabot Corp.; "NIPex 90", "NIPex 80", "NIPex 70", "NIPex 60", "NIPex 40", "NIPex 30", "Printex 3", "Printex L6", "Printex L" series and "Printex P" series all available from Degusa AG.; "#750B", "#650B", "#540", "#30", "#20", "#10", "#5", "MA600", "#3030B", "#3040B", "#3050B" and "#3350B" all available from Mitsubishi Chemical Corp.; "TOKABLACK SAF-HS", "TOKABLACK N234", " TOKABLACK IISAF-HS", "TOKABLACK HAF-HS" and "TOKABLACK N351" all available from Tokai Carbon Co., Ltd.; and "Raven 2000", "Raven 1500", "Raven 1250", "Raven 1200", "Raven 1190", "Raven 1170", "Raven 890H" and "Raven C" series all available from Colombian Co., Ltd.

Among these commercially available carbon blacks, especially preferred are "Vulcan 9A32" (specific surface area: 140; DBP oil absorption: 114; volatile content: 1.5) available from Cabot Corp.; "NIPex 70" (specific surface area: 145; DBP oil absorption: 123; volatile content: 1.2) and "NIPex 60" (specific surface area: 115; DBP oil absorption: 114; volatile content: 1.0) available from Degusa AG.; and "SAF-HS" (specific surface area: 142; DBP oil absorption: 130; volatile content: 0.4) available from Tokai Carbon Co., Ltd.

These carbon blacks may be used alone or in combination of any two or more thereof.

In the present invention, an inorganic pigment other than the carbon black or an organic pigment may be contained in the water-insoluble vinyl polymer particles. Also, the organic or inorganic pigment may be used in combination with an extender pigment, if required. Examples of the inorganic pigment other than the carbon black include metal oxides, metal sulfides and metal chlorides. Examples of the organic pigment include azo pigments, disazo pigments, phthalocyanine pigments, quinacridone pigments, isoindolinone pigments, dioxazine pigments, perylene pigments, perinone pigments, thioindigo pigments, anthraquinone pigments and quinophthalone pigments. Examples of the extender pigment include silica, calcium carbonate and talc.

(Water-Insoluble Polymer)

The water dispersion and the water-based ink according to the present invention are obtained by using a water dispersion containing water-insoluble polymer particles into which the carbon black is contained or incorporated, in view of attaining excellent ejecting reliability and image density, etc.

Examples of the water-insoluble polymer forming the water-insoluble polymer particles include water-insoluble vinyl polymers, water-insoluble ester-based polymers and water-insoluble urethane-based polymers. Among these water-insoluble polymers, preferred are water-insoluble vinyl polymers in view of a good stability of the resultant water dispersion.

The term "water-insoluble polymer" used herein means such a polymer which is dissolved at 25°C in 100 g of water in an amount of 10 g or less, preferably 5 g or less and more preferably 1 g or less as measured after dried at 105°C for 2 h. When the water-insoluble polymer contains a salt-forming group, the above amount of the water-insoluble polymer dissolved in water is measured after the salt-forming group is neutralized 100% with acetic acid or sodium hydroxide according to the kind of salt-forming group.

The water-insoluble polymer is preferably a water-insoluble graft polymer containing a constitutional unit derived from a macromer (b) in view of allowing the resultant water dispersion and water-based ink to exhibit a sufficient image density. In particular, the water-insoluble polymer is more preferably a water-insoluble graft polymer which contains a main chain containing a constitutional unit derived from a salt-forming group-containing monomer (a) and a constitutional unit derived from a hydrophobic monomer (c), and a side chain containing a constitutional unit derived from the macromer (b).

The water-insoluble graft polymer is preferably a water-insoluble vinyl polymer which may be produced by copolymerizing a monomer mixture containing the salt-forming group-containing monomer (a) (hereinafter occasionally referred to merely as the "component (a)"), the macromer (b) (hereinafter occasionally referred to merely as the "component (b)") and the hydrophobic monomer (c) (hereinafter occasionally referred to merely as the "component (c)") (hereinafter, the mixture is occasionally referred to as merely a "monomer mixture").

Salt-forming group-containing monomer (a):

The component (a) is used for enhancing a dispersion stability of the resultant dispersion, etc. The component (a) includes cationic monomers and anionic monomers. Specific examples of the component (a) include those monomers described on page 5, from column 7, line 24 to column 8, line 29 of JP 9-286939A. Examples of the salt-forming group include a carboxyl group, a sulfonic group, a phosphoric group, an amino group and an ammonium group.

Typical examples of the cationic monomers include unsaturated amine-containing monomers and unsaturated ammonium salt-containing monomers. Among these cationic monomers, preferred are N,N-dimethylaminoethyl (meth)acrylate and N-(N',N'-dimethylaminopropyl) (meth)acrylate.

Typical examples of the anionic monomers include unsaturated carboxylic acid monomers, unsaturated sulfonic acid monomers and unsaturated phosphoric acid monomers.

Examples of the unsaturated carboxylic acid monomers include acrylic acid, methacrylic acid, crotonic acid, itaconic acid, maleic acid, fumaric acid, citraconic acid and 2-methaeryloyloxymethylauceinic acid.

Examples of the unsaturated sulfonic acid monomers include styrenesulfonic acid, 2-acrylamido-2-methylpropanesulfonic acid, 3-sulfopropyl (meth)acrylate and bis(3-sulfopropyl)itaconate.

Examples of the unsaturated phosphoric acid monomers include vinylphosphonic acid, vinyl phosphate, bis(methacryloxyethyl)phosphate, diphenyl-2-acryloyloxyethyl phosphate, diphenyl-2-methacryloyloxyethyl phosphate and dibutyl-2-acryloyloxyethyl phosphate.

Among the above anionic monomers, in view of a good dispersion stability and a good ejecting reliability of the resultant inks, preferred are the unsaturated carboxylic acid monomers, and more preferred are acrylic acid and methacrylic acid. The above compounds as the component (a) may be used alone or in combination of any two or more thereof.

Macromer (b):

The component (b) is used in view of enhancing a dispersion stability of the water-insoluble polymer fine particles containing the carbon black, etc., and may be such a macromer which is a monomer containing a polymerizable unsaturated functional group at one terminal end thereof and having a number-average molecular weight of 500 to 100,000 and preferably 1,000 to 10,000.

Meanwhile, the number-average molecular weight of the component (b) may be measured by gel permeation chromatography using polystyrene as a standard substance and using tetrahydrofuran containing 50 mmol/L of acetic acid as a solvent.

Specific examples of the macromer as the component (b) include the below-mentioned styrene-based macromers (b-1), alkyl (meth)acrylate-based macromers (b-2), aromatic ring-containing (meth)acrylate-based macromers (b-3) and silicone-based macromers (b-4).

Styrene-based macromer (b-1):

The styrene-based macromer means a macromer containing a constitutional unit derived from the styrene-based monomer (hereinafter occasionally referred to merely as a "monomer (b-1)") such as styrene, $\alpha$-methyl styrene and vinyl toluene. Among these styrene-based monomers, preferred is styrene.

Examples of the styrene-based macromer include styrene homopolymers having a polymerizable functional group at one terminal end thereof, and copolymers of styrene with the other monomer which have a polymerizable functional group at one terminal end thereof. The polymerizable functional group bonded to the one terminal end is preferably an acryloyloxy group or a methacryloyloxy group. When these functional groups are copolymerized with the other components, it is possible to produce the water-insoluble graft polymer containing a constitutional unit derived from the styrene-based macromer.

Examples of the other monomer copolymerizable with styrene include acrylonitrile, the below-mentioned (meth)acrylates (hereinafter occasionally referred to merely as the "monomer (b-2)"), and aromatic ring-containing (meth)acrylate-based monomers other than styrene (hereinafter occasionally referred to merely as the "monomer (b-3)").

The content of the constitutional unit derived from the styrene-based monomer in the side chain or the styrene-based macromer is preferably 60% by weight or more, more preferably 70% by weight or more and still more preferably 90% by weight or more in view of a high lighter-fastness.

The styrene-based macromer is commercially available, for example, from Toagosei Co., Ltd., as product names of AS-6(S), AN-6(S), HS-6(S), etc.

Alkyl(meth)acrylate-based macromer (b-2)

The alkyl(meth)acrylate-based macromer means such a macromer containing a constitutional unit derived from the (meth)acrylate (hereinafter referred to merely as the "monomer (b-2)") containing an alkyl group having 1 to 22 carbon atoms and preferably 1 to 18 carbon atoms which may also contain a hydroxyl group.

Specific examples of the (meth)acrylate include methyl (meth)acrylate, ethyl (meth)acrylate, (iso)propyl (meth)acrylate, 2-hydroxyethyl (meth)acrylate, (iso- or tertiary-)butyl (meth)acrylate, 2-ethylhexyl (meth)acrylate, (iso)octyl (meth)acrylate, (iso)decyl (meth)acrylate and (iso)stearyl (meth)acrylate.

The side chain containing the constitutional unit derived from the monomer (b-2) may be produced by copolymerizing the alkyl(meth)acrylate-based macromer having a polymerizable functional group at one terminal end thereof. Examples of the alkyl(meth)acrylate-based macromer include a methyl methacrylate-based macromer, a butyl acrylate-based macromer, an isobutyl methacrylate-based macromer and a lauryl methacrylate-based macromer.

These alkyl(meth)acrylate-based macromers may be homopolymers of the alkyl(meth)acrylate having a polymerizable functional group at one terminal end thereof, or copolymers of the alkyl(meth)acrylate with other monomer which have a polymerizable functional group at one terminal end thereof. The polymerizable functional group bonded to one terminal end is preferably an acryloyloxy group or a methacryloyloxy group. Examples of the other monomer copolymerizable with the alkyl(meth)acrylate include the above-mentioned styrene-based monomers (monomers (b-1)) and the below-mentioned aromatic ring-containing (meth)acrylate-based monomers other than styrene (monomer (b-3)).

In the side chain or the alkyl(meth)acrylate macromer, the content of the constitutional unit derived from the (meth) acrylate is largest, and preferably 60% by weight or more, more preferably 70% by weight or more and still more preferably 90% by weight or more in view of a high lighter-fastness.

Aromatic ring-containing (meth)acrylate-based macromer (b-3)

The aromatic ring-containing (meth)acrylate-based macromer means such a macromer containing a constitutional unit derived from the aromatic ring-containing (meth)acrylate as the monomer (b-3). The aromatic ring-containing (meth)acrylate is preferably a monomer represented by the following formula (2):

$$CH_2=CR^1COOR^2 \qquad (2)$$

wherein $R^1$ is a hydrogen atom or a methyl group; and $R^2$ is a substituted or unsubstituted arylalkyl group having 7 to 22 carbon atoms or a substituted or unsubstituted aryl group having 6 to 22 carbon atoms.

Specific examples of the aromatic ring-containing (meth)acrylate include benzyl (meth)acrylate, phenyl (meth)acrylate, 2-phenylethyl (meth)acrylate, phenoxyethyl (meth)acrylate, 1-naphthyl acrylate, 2-naphthyl (meth)acrylate, phthalimidomethyl (meth)acrylate, p-nitrophenyl (meth)acrylate, 2-hydroxy-3-phenoxypropyl (meth)acrylate, 2-methacryloyloxyethyl-2-hydroxypropyl phthalate and 2-acryloyloxyethyl phthalate. Among these the aromatic ring-containing (meth)acrylates, preferred is benzyl (meth)acrylate. These the aromatic ring-containing (meth)acrylates may be used alone or in combination of any two or more thereof.

The side chain containing the constitutional unit derived from the aromatic ring-containing (meth)acrylate may be produced by copolymerizing the aromatic ring-containing (meth)acrylate-based macromer having a polymerizable functional group at one terminal end thereof.

Examples of the aromatic ring-containing (meth)acrylate-based macromer include homopolymers of the aromatic ring-containing (meth)acrylate having a polymerizable functional group at one terminal end thereof, and copolymers of the aromatic ring-containing (meth)acrylate with other monomer which have a polymerizable functional group at one terminal end thereof. The polymerizable functional group bonded to one terminal end of the macromer is preferably an acryloyloxy group or a methacryloyloxy group. Examples of the other monomers copolymerizable with the aromatic ring-containing (meth)acrylate include the above-mentioned styrene-based monomers as the monomer (b-1) and the (meth)acrylates as the monomer (b-2).

In the side chain or the aromatic ring-containing (meth)acrylate-based macromer, the constitutional unit derived from the aromatic ring-containing (meth)acrylate has a largest content.

Silicone-based macromer (b-4)

The water-insoluble graft polymer used in the present invention may further contain an organopolysiloxane chain as the side chain thereof. Such a side chain is preferably produced, for example, by copolymerizing a silicone-based macromer having a polymerizable functional group at one terminal end thereof which is represented by the following formula (3):

$$CH_2=C(CH_3)-COOC_3H_6-[Si(CH_3)_2-O]_t-Si(CH_3)_3 \qquad (3)$$

wherein t is a number of 8 to 40.

When the polymer used in the present invention is the water-insoluble graft polymer, the weight ratio of a main chain of the polymer to a side chain thereof [main chain/side chain] is preferably from 1/1 to 20/1, more preferably from 3/2 to 15/1 and still more preferably from 2/1 to 10/1 in view of enhancing a high lighter-fastness and a storage stability. Meanwhile, the weight ratio is calculated assuming that the polymerizable functional group is contained in the side chain. Among the above macromers, the styrene-based macromers having a polymerizable functional group at one terminal end thereof are preferred in view of a high affinity to the carbon black and an enhanced storage stability.

Hydrophobic Monomer (c):

The hydrophobic monomer as the above component (c) is used for enhancing a water resistance, a high lighter-fastness, etc. Examples of the hydrophobic monomer include alkyl (meth)acrylates, alkyl (meth)acrylamides and aromatic ring-containing monomers.

The alkyl (meth)acrylates are preferably (meth)acrylates containing an alkyl group having 1 to 30 carbon atoms. Examples of the alkyl (meth)acrylates include methyl (meth)acrylate, ethyl (meth)acrylate, (iso)propyl (meth)acrylate, (iso- or tertiary-)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate, (iso)cetyl (meth)acrylate, (iso)stearyl (meth)acrylate and (iso)behenyl (meth)acrylate. Among these alkyl (meth)acrylates, in view of a good dispersion stability, preferred are (meth)acrylates containing a long-chain alkyl group having 8 to 30 carbon atoms and preferably 12 to 22 carbon atoms, and more preferred are (iso)lauryl (meth)acrylate, (iso)stearyl (meth)acrylate and (iso)behenyl (meth)acrylate.

Examples of the alkyl (meth)acrylamides include (meth)acrylamides containing an alkyl group having 1 to 22 carbon atoms such as dimethyl (meth)acrylamide, diethyl (meth)acrylamide, dibutyl (meth)acrylamide, t-butyl (meth)acrylamide, octyl (meth)acrylamide and dodecyl (meth)acrylamide.

Examples of the aromatic ring-containing monomers include styrene-based monomers (c-1) such as styrene, 2-methyl styrene and vinyl toluene; aryl esters of (meth)acrylic acid such as benzyl (meth)acrylate and phenoxyethyl (meth)acrylate; and aromatic group-containing vinyl monomers having 6 to 22 carbon atoms (c-2) such as ethyl vinyl benzene, 4-vinyl biphenyl, 1,1-diphenyl ethylene, vinyl naphthalene and chlorostyrene.

Meanwhile, the terms "(iso- or tertiary-) " and "(iso)" used herein mean both the structure in which the groups expressed by "iso" and "tertiary" are present, and the structure in which these groups are not present (namely, "normal"), and the term "(meth)acrylate" means acrylate, methacrylate or both thereof.

As the component (c), in view of enhancing an image density and a high lighter-fastness, there are preferably used the (meth)acrylate containing a long-chain alkyl group having 8 to 30 carbon atoms and/or the aromatic ring-containing monomer.

The above respective components (c) may be used alone or in combination of any two or more thereof.

In the present invention, the monomer mixture containing the respective components (a), (b) and (c) preferably further contains (d) a hydroxyl-containing monomer (hereinafter occasionally referred to merely as a "component (d)"). The component (d) exhibits an excellent effect of enhancing the dispersion stability of the resultant dispersion. Examples of the component (d) include 2-hydroxyethyl (meth)acrylate, 3-hydroxypropyl (meth)acrylate, polyethylene glycol (n = 2 to 30 wherein n represents an average molar number of addition of oxyalkylene groups: this definition is similarly applied to the subsequent descriptions) (meth) acrylate, polypropylene glycol (n = 2 to 30) (meth)acrylate and poly(ethylene glycol (n = 1 to 15)/propylene glycol (n = 1 to 15) (meth)acrylate. Among these components (d), preferred are 2-hydroxyethyl (meth)acrylate, polyethylene glycol monomethacrylate and polypropylene glycol methacrylate.

The monomer mixture may further contain (e) a monomer (hereinafter occasionally referred to merely as a "component (e)") represented by the following general formula (4):

$$CH_2=C(R^3)COO(R^4O)_pR^5 \qquad (4)$$

wherein $R^3$ is a hydrogen atom or an alkyl group having 1 to 5 carbon atoms; $R^4$ is a divalent hydrocarbon group having 1 to 30 carbon atoms which may contain a hetero atom; $R^5$ is a monovalent hydrocarbon group having 1 to 30 carbon atoms which may contain a hetero atom; and p represents an average molar number of addition, and is a number from 1 to 60 and preferably a number from 1 to 30.

The component (e) exhibits an excellent effect of enhancing an ejecting reliability of the resultant water-based ink and preventing occurrence of slippage even upon continuous printing.

In the general formula (4), examples of the hetero atom which may be contained in $R^4$ and $R^5$ groups include a nitrogen atom, an oxygen atom, a halogen atom and a sulfur atom.

Typical examples of the groups represented by $R^4$ and $R^5$ include an aromatic group having 6 to 30 carbon atoms, a heterocyclic group having 3 to 30 carbon atoms, and an alkylene group having 1 to 30 carbon atoms. These groups may have a substituent group, and may be used in combination of any two or more thereof. Examples of the substituent group include an aromatic group, a heterocyclic group, an alkyl group, a halogen atom and an amino group.

Examples of the groups represented by $R^4$ include a substituted or unsubstituted phenylene group having 1 to 24 carbon atoms, an aliphatic alkylene group having 1 to 30 carbon atoms and preferably 1 to 20 carbon atoms, an aromatic ring-containing alkylene group having 7 to 30 carbon atoms, and a hetero ring-containing alkylene group having 4 to 30 carbon atoms. Specific examples of the preferred $R^4O$ group include an oxymethylene group, an oxy(iso)propylene group, an oxytetramethylene group, an oxyheptamethylene group, an oxyhexamethylene group, and oxyalkylene groups having 2 to 7 carbon atoms which are each constituted from at least one of these oxyalkylene groups, and an oxyphenylene group.

Examples of the groups represented by $R^5$ include a phenyl group, a branched or unbranched aliphatic alkyl group having 1 to 30 carbon atoms and preferably 1 to 20 carbon atoms, an aromatic ring-containing alkyl group having 7 to 30 carbon atoms, and a hetero ring-containing alkyl group having 4 to 30 carbon atoms. Examples of the preferred $R^5$ group include an alkyl group having 1 to 12 carbon atoms such as methyl, ethyl, (iso)propyl, (iso)butyl, (iso)pentyl and (iso)hexyl, and a phenyl group.

Specific examples of the component (e) include methoxy polyethylene glycol (p in the general formula (4): 1 to 30; this is similarly applied to the subsequent descriptions) (meth)acrylate, methoxy polytetramethylene glycol (p = 1 to 30) (meth)acrylate, ethoxy polyethylene glycol (p = 1 to 30) (meth)acrylate, (iso)propoxy polyethylene glycol (p =1 to 30) (meth)acrylate, butoxy polyethylene glycol (p = 1 to 30) (meth)acrylate, octoxy polyethylene glycol (p = 1 to 30) (meth)acrylate, methoxy polypropylene glycol (p = 1 to 30) (meth)acrylate, and methoxy (ethylene glycol/propylene glycol copolymer) (p = 1 to 30: among which the number of ethylene glycol constitutional units is 1 to 29) (meth)acrylate. Among these compounds, preferred is methoxy polyethylene glycol (p = 2 to 20) (meth)acrylate and octoxy polyethylene glycol (p = 2 to 20) (meth)acrylate.

Specific examples of the commercially available components (d) and (e) include polyfunctional acrylate monomers (NK Esters) available from Shin-Nakamura Kagaku Kogyo Co., Ltd., such as "M-40G", "M-90G" and "M-230G"; and BLEMMER Series available from NOF Corporation, such as "PE-90", "PE-200", "PE-350", "PME-100", "PME-200", "PME-400", "PME-1000", "PP-500", "PP-800", "PP-1000", "AP-150", "AP-400", "AP-550", "AP-800", "50PEP-300" and "50POEP-800B".

These components (d) and (e) are respectively used alone or in the form of a mixture of any two or more thereof.

Upon production of the water-insoluble polymer, the respective contents of the above components (a) to (e) in the monomer mixture (contents of unneutralized components; this definition is similarly applied to the subsequent descriptions) or the contents of respective constitutional units derived from the components (a) to (e) are as follows.

The content of the component (a) is preferably from 1 to 50% by weight, more preferably from 2 to 40% by weight, still more preferably from 3 to 30% by weight and further still more preferably from 5 to 20% by weight in view of a good dispersion stability of the resultant dispersion, etc.

The content of the component (b) is preferably from 1 to 50% by weight, more preferably from 3 to 40% by weight and still more preferably from 5 to 35% by weight in view of a good dispersion stability of the resultant dispersion, etc.

The content of the component (c) is preferably from 5 to 90% by weight, more preferably from 5 to 80% by weight and still more preferably from 10 to 60% by weight in view of enhancing a water resistance, a high lighter-fastness, etc.

The weight ratio of the component (a) to a sum of the components (b) and (c) ((a)/[(b)+(c)]) is preferably from 0.01 to 1, more preferably from 0.02 to 0.7 and still more preferably from 0.05 to 0.5 in view of a good long-term storage stability and a good ejecting reliability of the resultant water-based ink, etc.

The content of the component (d) is preferably from 1 to 40% by weight, more preferably from 2 to 30% by weight and still more preferably from 5 to 25% by weight in view of a good re-dispersibility and a good dispersion stability.

The content of the component (e) is preferably from 1 to 50% by weight, more preferably from 2 to 30% by weight and still more preferably from 5 to 30% by weight in view of a good ejecting reliability, a good dispersion stability, etc.

The total content of the components (a) and (d) in the monomer mixture is preferably from 5 to 60% by weight, more preferably from 7 to 50% by weight and still more preferably from 10 to 40% by weight in view of a good stability and a good water resistance in water, etc.

The total content of the components (a) and (e) in the monomer mixture is preferably from 5 to 75% by weight, more preferably from 7 to 50% by weight and still more preferably from 10 to 40% by weight in view of a good dispersion stability in water and a good ejecting reliability, etc.

The total content of the components (a), (d) and (e) in the monomer mixture may be controlled, if required, to the range of preferably from 5 to 60% by weight, more preferably from 7 to 50% by weight and still more preferably from 10 to 40% by weight in view of a good dispersion stability in water, a good ejecting reliability, etc.

The water-insoluble polymer constituting the water-insoluble polymer particles used in the present invention may be produced by copolymerizing the monomer mixture by known methods such as bulk polymerization, solution polymerization, suspension polymerization and emulsion polymerization. Among these polymerization methods, the solution polymerization is preferred since the effects such as high image density and high anti-bleeding property are suitably attained by the method.

The solvent for the solution polymerization method is preferably an organic polar solvent having a high affinity to the water-insoluble polymer. The organic polar solvent preferably has a solubility in water of not more than 50% by weight but not less than 5% by weight as measured at 20°C. Examples of the organic polar solvents include aliphatic alcohols such as butoxyethanol; aromatic hydrocarbons such as toluene and xylene; ketones such as methyl ethyl ketone and methyl isobutyl ketone; and esters such as ethyl acetate. Among these solvents, preferred are methyl ethyl ketone, methyl isobutyl ketone, toluene, xylene, butoxyethanol, and mixed solvents of at least one thereof with water.

The polymerization may be carried out in the presence of a conventionally known polymerization initiator, e.g., azo compounds such as 2,2'-azobisisobutyronitrile and 2,2'-azobis(2,4-dimethylvaleronitrile), and organic peroxides such as t-butyl peroxyoctoate and dibenzoyl oxide. The amount of the polymerization initiator to be used is preferably from 0.001 to 5 mol and preferably from 0.01 to 2 mol per 1 mol of the monomer mixture.

The polymerization may also be carried out in the presence of a conventionally known chain transfer agent, e.g., mercaptans such as octyl mercaptan and 2-mercaptoethanol, and thiuram disulfides.

The polymerization conditions of the monomer mixture vary depending upon the kinds of polymerization initiators, monomers, solvents, etc., to be used, and the polymerization is generally conducted at a temperature of 30 to 100°C and preferably 50 to 80°C. The polymerization time is preferably from 1 to 20 h. The polymerization is preferably conducted in an atmosphere of an inert gas such as nitrogen and argon.

After completion of the polymerization, the polymer thus produced is isolated from the reaction solution by a known method such as reprecipitation and removal of solvent by distillation. The thus obtained polymer may be purified by repeated reprecipitation, membrane separation, chromatography, extraction, etc., for removing unreacted monomers, etc.

The weight-average molecular weight of the resultant water-insoluble polymer is preferably from 5,000 to 500,000, more preferably from 8,000 to 400,000 and still more preferably from 10,000 to 300,000 in view of a good dispersion stability of the carbon black, a good water resistance and a good ejecting reliability.

Meanwhile, the weight-average molecular weight of the polymer may be measured by gel permeation chromatography using polystyrene as a standard substance and using chloroform containing 1 mmol/L of dodecyldimethylamine as a solvent.

When the water-insoluble polymer used in the present invention contains a salt-forming group derived from the salt-forming group-containing monomer (a), the salt-forming group is neutralized with a neutralizing agent. As the neutralizing agent, acids or bases may be used according to the kind of the salt-forming group contained in the polymer. Examples of the neutralizing agent include acids such as hydrochloric acid, acetic acid, propionic acid, phosphoric acid, sulfuric acid, lactic acid, succinic acid, glycolic acid, gluconic acid and glyceric acid, and bases such as lithium hydroxide, sodium hydroxide, potassium hydroxide, ammonia, methylamine, dimethylamine, trimethylamine, ethylamine, diethylamine, triethylamine, triethanolamine and tributylamine.

The degree of neutralization of the salt-forming group is preferably from 10 to 200%, more preferably from 20 to 180% and still more preferably from 50 to 150%. When the salt-forming group is an anionic group, the degree of neutralization thereof is calculated according to the following formula:

$$\text{[weight (g) of neutralizing agent)/equivalent of neutralizing agent]/}$$
$$\text{[acid value of polymer (KOH mg/g) x weight (g) of polymer/(56 x 1000)] x 100}$$

When the salt-forming group is a cationic group, the degree of neutralization thereof is calculated according to the following formula:

$$\text{[weight (g) of neutralizing agent)/equivalent of neutralizing agent]/}$$
$$\text{[amine value of polymer (HCl mg/g) x weight (g) of polymer/(36.5 x 1000)] x 100}$$

The acid value or amine value may be calculated from the respective constitutional units of the polymer, or may also be determined by the method of subjecting a solution prepared by dissolving the polymer in an appropriate solvent such as methyl ethyl ketone to titration.

Process for production of water dispersion

The water dispersion of the carbon black-containing water-insoluble polymer particles (hereinafter referred to merely as "CB-containing particles") is preferably produced through the following steps (1) and (2):

Step (1): Dispersing a mixture containing the water-insoluble polymer, organic solvent, carbon black and water as well as neutralizing agent, if required.
Step (2): Removing the organic solvent from the resultant dispersion.

In the step (1), first, preferably, the water-insoluble polymer is dissolved in an organic solvent, and then the carbon black and water together with optional components such as neutralizing agent and surfactant, if required, are added and mixed in the resultant organic solvent solution to obtain a dispersion of an oil-in-water type. The content of the carbon black in the mixture is preferably from 5 to 50% by weight. The content of the organic solvent in the mixture is preferably from 10 to 70% by weight. The content of the water-insoluble polymer in the mixture is preferably from 2 to 40% by weight, and the content of water in the mixture is preferably from 10 to 70% by weight. The water-insoluble polymer containing a salt-forming group is preferably neutralized with a neutralizing agent. In this case, the water-insoluble polymer may be previously neutralized with the neutralizing agent. The degree of neutralization of the salt-forming group in the polymer is not particularly limited. In general, the degree of neutralization is preferably controlled such that the finally obtained water dispersion exhibits a neutral liquid property, for example, a pH of 4.5 to 10. The pH of the dispersion may also be determined from a desired degree of neutralization for the water-insoluble polymer.

Examples of the preferred organic solvents include alcohol solvents, ketone solvents and ether solvents, i.e., the organic solvents are preferably those having a solubility in water of 50% by weight or less but 10% by weight or more as measured at 20˚C.

Examples of the alcohol solvents include ethanol, isopropanol, various butanols and diacetone alcohol. Examples of the ketone solvents include acetone, methyl ethyl ketone, diethyl ketone and methyl isobutyl ketone. Examples of the ether solvents include dibutyl ether, tetrahydrofuran and dioxane. Among these solvents, preferred are isopropanol, acetone and methyl ethyl ketone, and more preferred is methyl ethyl ketone. These solvents may be used alone or in the form of a mixture of any two or more thereof.

As the neutralizing agent, acids or bases may be selectively used according to the kind of salt-forming group contained in the water-insoluble polymer. Specific examples of the neutralizing agent include those previously described.

The method for dispersing the mixture used in the step (1) is not particularly limited. Preferably, the mixture is first subjected to preliminary dispersion procedure, and then to the substantial dispersion procedure by applying a shear stress thereto.

Upon subjecting the mixture to the preliminary dispersion procedure, there may be used ordinary mixing or stirring devices such as anchor blades. Examples of the preferred mixing or stirring devices include high-speed mixers or stirrers. To apply the shear stress to the mixture in the substantial dispersion procedure, there may be used, for example, kneading machines such as roll mills, beads mills, kneaders and extruders, and homo-valve-type or chamber-type high-pressure homogenizers.

In the step (2), the organic solvent is removed by distillation from the dispersion thus obtained in the above step (1) to render the dispersion aqueous or water-based and thereby obtain a water dispersion of the CB-containing particles having a desired average particle size. The removal of the organic solvent from the water dispersion may be performed by an ordinary method such as distillation under reduced pressure. The organic solvent is substantially completely removed from the thus obtained water dispersion of the CB-containing particles. The content of the residual organic solvent in the water dispersion is preferably 0.1% by weight or less and more preferably 0.01% by weight or less. Further, the thus obtained water dispersion of the CB-containing particles may be classified by centrifugal separation in order to obtain the CB-containing particles having a desired particle size. The water dispersion of the water-insoluble polymer particles is preferably passed through a filter to remove coarse particles therefrom. Although such coarse particles are usually not present or present only in a small amount, in order to prevent clogging of nozzles in a printer, the mesh size of the filter is preferably from 0.45 to 10 $\mu$m and more preferably from 0.8 to 5 $\mu$m.

In the above water dispersion of the CB-containing particles, solid components made of the carbon black-containing water-insoluble polymer are dispersed in water as a main medium. The configuration of the CB-containing particles is not particularly limited as long as the particles are formed from at least the carbon black and the water-insoluble polymer. Examples of the configuration of the CB-containing particles include the particle configuration in which the carbon black is enclosed in the respective water-insoluble polymer particles, the particle configuration in which the carbon black is uniformly dispersed in the respective water-insoluble polymer particles, and the particle configuration in which the carbon black is exposed onto a surface of the respective water-insoluble polymer particles.

The average primary particle size of the CB-containing particles is preferably from 10 to 500 nm, more preferably from 30 to 300 nm and still more preferably from 50 to 200 nm in view of effective prevention of clogging of nozzles in a printer, good dispersion stability, etc. The average particle size of the CB-containing particles may be measured by the below-mentioned method.

The water dispersion of the water-insoluble polymer particles may be directly used as a water-based ink using water as a main medium, and may further contain various additives ordinarily used in water-based inks for ink-jet printing such as wetting agents, penetrants, dispersants, viscosity modifiers, defoaming agents, mildew-proof agents and anti-corrosion agents.

The content of the carbon black in the water dispersion and the water-based ink of the present invention is preferably from 1 to 30% by weight, more preferably from 2 to 20% by weight and still more preferably from 2 to 15% by weight in view of a good dispersion stability, a high image density, etc. Also, the weight ratio of the carbon black to the water-insoluble polymer [carbon black/water-insoluble polymer] is preferably from 50/50 to 90/10, more preferably from 50/50 to 78/22 and still more preferably from 65/45 to 75/25 in view of a high image density, a good dryness and a high lighter-fastness.

The content (solid content) of the CB-containing particles in the water dispersion and the water-based ink is preferably controlled to from 0.5 to 30% by weight and more preferably from 1 to 15% by weight in view of a good image density and a good ejection reliability thereof.

The content of water in the water dispersion and the water-based ink of the present invention is preferably from 30 to 90% by weight and more preferably from 40 to 80% by weight.

The surface tension of the water dispersion of the present invention is preferably from 30 to 72 mN/m and more preferably from 40 to 72 mN/m as measured at 20˚C, and the surface tension of the water-based ink of the present invention is preferably from 25 to 50 mN/m and more preferably from 27 to 45 mN/m as measured at 20˚C.

The viscosity of the water dispersion of the present invention which has a solid content of 20 wt% is preferably from 1 to 12 mPa•s, more preferably from 1 to 9 mPa•s and still more preferably from 2 to 8 mPa•s as measured at 20˚C to produce a water-based ink having a suitable viscosity. The viscosity of the water-based ink of the present invention is preferably from 2 to 20 mPa•s, more preferably from 2.2 to 15 mPa•s and still more preferably from 2.4 to 12 mPa•s in view of maintaining a good ejection reliability thereof.

EXAMPLES

In the following production examples, examples and comparative examples, the "part(s)" and "%" indicate "part(s) by weight" and "% by weight", respectively, unless otherwise specified.

PRODUCTION EXAMPLES 1 AND 2 (Production of Polymer Solution)

A reaction vessel was charged with 40.1 parts (on the weight basis) of a monomer solution as an initial charge shown in Table 1, followed by mixing the solution. Then, the reaction vessel was fully purged with a nitrogen gas to thereby obtain a mixed solution.
Separately, 160.4 parts (on the weight basis) of a dropping monomer solution as shown in Table 1 was charged into a dropping funnel, and the dropping funnel was fully purged with a nitrogen gas to thereby obtain a mixed solution.
The mixed solution in the reaction vessel was heated to 75˚C under stirring in a nitrogen atmosphere, and then the mixed solution in the dropping funnel was gradually dropped thereinto over 3 h. After completion of the dropping, the obtained mixed solution was held at a temperature of 75˚C for 2 h, and then a solution prepared by dissolving 0.3 part of a polymerization initiator (2,2'-Azobis(2,4-dimethyl valeronitrile) in 5 parts of methyl ethyl ketone) was added to the mixed solution, and the resultant solution was aged at 75˚C for 3 h and further at 85˚C for 2 h to obtain a polymer solution.
A part of the resultant polymer solution was dried under reduced pressure at 105˚C for 2 h to remove the solvent therefrom, thereby isolating the polymer. The weight-average molecular weight of the resultant polymer was measured by gel permeation chromatography using polystyrene as a standard substance and using chloroform containing 1 mmol/L of dodecyl dimethylamine as a solvent.
The results are shown in Table 1. Meanwhile, the values of the respective monomers as shown in Table 1 indicate weight parts of the effective ingredients therein.

TABLE 1

|  | Production Example 1 | Production Example 2 |
|---|---|---|
| Initially charged monomer solution (wt part) | | |
| (a) Methacrylic acid | 3 | 3 |
| (b) Styrene macromer [1] | 2 | 2 |
| (c) Styrene | 10 | 2 |
| (c) Stearyl methacrylate | | 10 |
| (d) Polypropylene glycol monomethacrylate [2] | | 3 |
| (e) Octoxy polyethylene glycol monomethacrylate [3] | 5 | |
| Methyl ethyl ketone | 20 | 20 |
| 2-Mercaptoethanol | 0.1 | 0.1 |
| Dropping monomer solution (wt part) | | |
| (a) Methacrylic acid | 12 | 12 |
| (b) Styrene macromer [1] | 8 | 8 |
| (c) Styrene | 40 | 8 |
| (c) Stearyl methacrylate | | 40 |
| (d) Polypropylene glycol monomethacrylate [2] | | 12 |
| (e) Octoxy polyethylene glycol monomethacrylate [3] | 20 | |
| Methyl ethyl ketone | 80 | 80 |

(continued)

| Dropping monomer solution (wt part) | | |
| --- | --- | --- |
| 2-Mercaptoethanol | 0.1 | 0.1 |
| 2,2'-Azobis(2,4-dimethyl valeronitrile) | 0.3 | 0.3 |
| Weight-average molecular weight of resultant polymer | 38,000 | 51,000 |

| Note: *1: "AS-6S" (tradename) having a number-average molecular weight of 6000 available from Toagosei Co., Ltd. <br> *2: "PP-500" (tradename) available from NOF Corporation; molar number of addition of propyleneoxide: 9 mol in average; terminal group: hydrogen <br> *3: Development product available from Shin-Nakamura Kagaku Kogyo Co., Ltd.; molar number of addition of ethyleneoxide: 4 mol in average; terminal group: 2-ethylhexyl |
| --- |

EXAMPLE 1 comparative (Water Dispersion of CB-Containing Particles, and Production of Water-Based Ink)

Twenty five parts of the polymer obtained by drying the polymer solution produced in Production Example 1 under reduced pressure, was dissolved in 25 parts of methyl ethyl ketone, and a neutralizing agent (5N sodium hydroxide aqueous solution) was added to the obtained polymer solution in an amount of 65% on the basis of an acid value thereof to neutralize a salt-forming group of the polymer. Further, 75 parts of carbon black was added to the neutralized product to control the weight ratio [(amount of CB x specific surface area of CB)/amount of water-insoluble polymer] thereof to 435. In addition, adequate amounts of methyl ethyl ketone and ion-exchanged water were added to the reaction solution to improve a fluidity thereof, followed by fully stirring. The obtained mixture was kneaded for 2 h using a three-roll mill "NR-84A (tradename)" available from Noritake Co., Ltd.
The resultant paste was charged into 250 parts of ion-exchanged water, fully stirred, and then subjected to distillation using an evaporator to remove methyl ethyl ketone and water therefrom, thereby obtaining a water dispersion of CB-containing particles having a solid content of 20%. The average particle size of the thus obtained CB-containing particles was measured by the below-mentioned method. The results are shown in Table 2.
Twenty five parts of the above obtained water dispersion of the CB-containing particles, 10 parts of glycerol, 5 parts of 2-{2-(2-butoxyethoxy)ethoxy}ethanol, 2 parts of hexanediol, 0.5 part of acetylene glycol EO adduct (n = 10) ["ACETYLENOL E100" (tradename) available from Kawaken Fine Chemical Co., Ltd.] and 57.5 parts of ion-exchanged water were mixed with each other. The resultant mixed solution was passed through a 1.2-$\mu$m membrane filter "Minisart (tradename)" available from Sartorius Inc., thereby obtaining a water-based ink.

EXAMPLES 2 TO 5 AND COMPARATIVE EXAMPLES 1 TO 3 (Water Dispersion of CB-Containing Particles, and Production of Water-Based Ink)

The polymer obtained by drying the polymer solution produced in Production Example 1 or 2 under reduced pressure, was dissolved in the same amount of methyl ethyl ketone, and a neutralizing agent (5N sodium hydroxide aqueous solution) was added to the obtained polymer solution in an amount of 65% on the basis of an acid value thereof to neutralize a salt-forming group of the polymer. Further, carbon black in an amount shown in Table 2 was added to the neutralized product, and then adequate amounts of methyl ethyl ketone and ion-exchanged water were added to the reaction solution to improve a fluidity thereof, followed by fully stirring. The obtained mixture was kneaded for 2 h using a three-roll mill "NR-84A (tradename)" available from Noritake Co., Ltd. The resultant paste was treated in the same manner as in Example 1 to obtain a water dispersion of CB-containing particles. Further, the water dispersion was treated in the same manner as in Example 1 to obtain a water-based ink.

EXAMPLES 6 TO 8 AND COMPARATIVE EXAMPLES 4 TO 6 (Water Dispersion of CB-Containing Particles, and Production of Water-Based Ink)

The same procedures as in Examples 2 to 5 and Comparative Examples 1 to 3 were repeated, thereby obtaining water-based inks.

[Measurement of Average Particle Size]

The average particle size was measured using a laser particle analyzing system "ELS-8000" (cumulant analysis) available from Otsuka Denshi Co., Ltd., under the following conditions.

Temperature : 25°C;

Angle between incident light and detector: 90°;

Cumulative frequency: 200 times;

Refractive index of dispersing medium: Refractive index of water (1.333); and

Measuring concentration: about $5 \times 10^{-3}$% by weight.

[Measurement of Specific Surface Area of CB]

Measured according to ASTM D3037-81.

[Measurement of DBP Oil Absorption]

Measured according to ASTM D2414-65T.

[Measurement of Volatile Content]

The volatile content was determined from a residual weight of a sample after heated at 950°C for 7 min (according to ASTM D1620-60).

The properties of water-based inks obtained in the respective Examples and Comparative Examples were evaluated by the following methods. The results are shown in Tables 2 and 3.

(1) Ejection Reliability

Using an ink-jet printer "EM930C (product number)" of a piezoelectric type commercially available from Seiko Epson Co., Ltd., character images were continuously printed at a rate of 2000 characters per sheet on 100 plain papers P available from Fuji Xerox Co., Ltd., and then a test document including characters, solid images and ruled lines was printed on the paper to evaluate the following three items:

(i) Sharp and clear characters;

(ii) Uniform solid images; and

(iii) No slippage of ruled lines.

The results were evaluated according to the following evaluation criteria.

[Evaluation Criteria]

○: All of the three items were satisfied (Acceptable level);

Δ: The three items were almost satisfied (Still at acceptable level without practical problems); and

✕: One or more items were unsatisfied (Unacceptable level).

(2) Image Density

Solid image printing was carried out on the same plain paper P as used in the above (1) and a recycled paper "G100, C2" available from Fuji Xerox Co., Ltd. After allowing the printed paper to stand for one day, the image density was measured at optional 10 positions on the paper using an optical densitometer "SpectroEye" available from Gretag-Macbeth Corp., to calculate an average of the measured values.

(3) Image Uniformity (Voids)

Solid image printing was carried out on the same plain paper P as used in the above (1) and the same recycled paper "G100, C2" as used in the above (2) to conduct a sensory evaluation about whether or not any unevenness of color occurred. The results were evaluated according to the following evaluation criteria.

[Evaluation Criteria]

○: No unevenness of color occurred (No voids);

Δ: Some unevenness of color occurred ; and

✕: Significant unevenness of color occurred (Many voids).

(4) Bleeding between Colors

On the same ordinary plain paper P as used in the above (1) and the same recycled paper "G100, C2" as used in the above (2), 10-point characters were printed using the first liquid composition, and then a background area of the paper was printed using the second liquid composition to form a pattern thereon, and conduct a sensory evaluation for bleeding of the respective character portions. The results were evaluated according to the following evaluation criteria.

[Evaluation Criteria]

○: All characters including Chinese characters and Kana characters were reproduced without problem;
Δ: Apart of Chinese characters were not reproduced, and practically undesirable level; and
×: Chinese characters and Kana characters were illegible.

(5) Dryness

A solid image having a size of 20 mm x 20 mm was printed on the same ordinary plain paper P as used in the above (1) and a chromatic color photo-finished paper available from Fuji Xerox Co., Ltd. Immediately after the printing as well as after 10 s, 30 s and 60 s from the printing, a back surface of another ordinary plain paper P was overlapped on the printed solid image, and further while applying a load of 490 g (loading area: 43 mm x 30 mm) onto the overlapped papers from above, the lower paper with the solid image was moved horizontally to measure stains on the overlapped paper. The results were evaluated according to the following evaluation criteria.

[Evaluation Criteria]

○: Substantially no peeling of the printed image occurred, and surrounding portions were free from blackish stains;
Δ: Substantially no peeling of the printed image occurred, and surrounding portions suffered from slight blackish stains, but still practically acceptable level; and
×: Printed image was rubbed off, and surrounding portions suffered from significant blackish stains, and fingers were considerably stained when rubbed therewith.

(6) High Lighter-Fastness

Text printing was carried out using the same printer and paper as used above, and after passage of 6 h, the extent of staining of the printed sample when the surface of the text image was traced with a fluorescent marker "BEAM LINER S BM-151" (tradename) commercially available from Zebra Co., Ltd., was observed with naked eyes, and the high lighter-fastness was evaluated on the basis of the following evaluation criteria.

[Evaluation Criteria]

○: No rubbed stains were generated when traced with a fluorescent marker.
Δ: Some rubbed stains were generated when traced with a fluorescent marker, but at a level without practical problems.
×: Generation of rubbed stains were observed when traced with a fluorescent marker, and significant staining occurred.

TABLE 2-1

| | | Examples | | | | |
|---|---|---|---|---|---|---|
| | | 1* | 2 | 3 | 4 | 5 |
| Production of polymer | | Production Example | | | | |
| | | 1 | 1 | 1 | 2 | 1 |
| Kind of carbon black (CB) *1 | | CB-1 | CB-2 | CB-3 | CB-2 | CB-4 |
| Amount of polymer (g) | | 25 | 25 | 25 | 25 | 25 |
| Amount of CB (g) | | 75 | 75 | 75 | 46.4 | 75 |
| Specific surface area of CB ($m^2$/g) | | 65 | 138 | 96 | 138 | 150 |
| Volatile content (wt%) | | 3.5 | 4.5 | 3.5 | 4.5 | 5.0 |
| DBP oil absorption (mL/100 g) | | 45 | 60 | 69 | 60 | 150 |
| (Amount of CB x specific surface area of CB)/amount of polymer ($m^2$/g) | | 195 | 414 | 288 | 256 | 450 |
| Average particle size of CB-containing particles (nm) | | 78 | 116 | 134 | 115 | 118 |
| Ejection reliability | | ○ | ○ | ○ | ○ | ○ |
| Image density | | 1.17 | 1.34 | 1.32 | 1.32 | 1.41 |
| Image uniformity | | ○ | ○ | ○ | ○ | ○ |
| Bleeding between colors | | ○ | ○ | ○ | ○ | ○ |
| Dryness | | ○ | ○ | ○ | ○ | ○ |
| High lighter-fastness | | ○ | ○ | ○ | ○ | ○ |

Note: *1: CB-1: "Special Black 350" available from Degusa AG.; (specific surface area: 65; DBP oil absorption: 45; volatile content: 3.5)
CB-2: "Mougl L" available from Cabot Corp.; (specific surface area: 138; DBP oil absorption: 60; volatile content: 4.5)
CB-3: "Regal 400R" available from Cabot Corp.; (specific surface area: 96; DBP oil absorption: 69; volatile content: 3.5)
CB-4: "Color Black S160" available from Degusa AG.; (specific surface area: 150; DBP oil absorption: 150; volatile content: 5.0)
* comparative example

TABLE 2-2

| | Comparative Examples | | |
|---|---|---|---|
| | 1 | 2 | 3 |
| Production of polymer | Production Example | | |
| | 1 | 2 | 2 |
| Kind of carbon black (CB) *1 | CB-5 | CB-6 | CB-7 |
| Amount of polymer (g) | 25 | 20 | 20 |
| Amount of CB (g) | 100 | 80 | 80 |
| Specific surface area of CB ($m^2$/g) | 370 | 94 | 260 |
| Volatile content (wt%) | 1.8 | 1.0 | 5.0 |
| DBP oil absorption (mL/100 g) | 77 | 71 | 160 |
| (Amount of CB x specific surface area of CB)/amount of polymer ($m^2$/g) | 1480 | 376 | 1040 |
| Average particle size of CB-containing particles (nm) | 119 | 86 | - |

(continued)

| Production of polymer | Production Example | | |
|---|---|---|---|
| | 1 | 2 | 2 |
| Ejection reliability | × | ○ | Not dispersed |
| Image density | 1.11 | 1.09 | |
| Image uniformity | ○ | × | |
| Bleeding between colors | × | Δ | |
| Dryness | × | ○ | |
| High lighter-fastness | Δ | Δ | |
| Note: *1: CB-5: "#2600" available from Mitsubishi Chemical Corp.; (specific surface area: 370; DBP oil absorption: 77; volatile content: 1.8) CB-6: "Regal 330R" available from Cabot Corp.; (specific surface area: 94; DBP oil absorption: 71; volatile content: 1.0) CB-7: "FW18" available from Degusa AG.; (specific surface area: 260; DBP oil absorption: 160; volatile content: 5.0) | | | |

TABLE 3-1

| | Examples | | |
|---|---|---|---|
| | 6 | 7 | 8 |
| Production of polymer | Production Example | | |
| | 1 | 2 | 2 |
| Kind of carbon black (CB) *2 | CB-1 | CB-2 | CB-3 |
| Amount of polymer (g) | 25 | 25 | 25 |
| Amount of CB (g) | 75 | 75 | 75 |
| (Amount of CB x specific surface area of CB)/amount of polymer ($m^2$/g) | 435 | 345 | 426 |
| Specific surface area of CB ($m^2$/g) | 145 | 115 | 142 |
| DBP oil absorption (mL/100g) | 123 | 114 | 130 |
| Average particle size of CB-containing particles (nm) | 156 | 154 | 153 |
| Ejection reliability | ○ | ○ | ○ |
| Image density | 1.37 | 1.36 | 1.40 |
| Image uniformity | ○ | ○ | ○ |
| Bleeding between colors | ○ | ○ | ○ |
| Dryness | ○ | ○ | ○ |
| High lighter-fastness | ○ | ○ | ○ |
| Note: *2: CB-1: "NIPex 70" available from Degusa AG.; (specific surface area: 145; DBP oil absorption: 123; volatile content: 1.2) CB-2: "NIPex 60" available from Degusa AG.; (specific surface area: 115; DBP oil absorption: 114; volatile content: 1.0) CB-3: "SAF-HG" available from Tokai Carbon Co., Ltd.; (specific surface area: 142; DBP oil absorption: 130; volatile content: 0.4) | | | |

TABLE 3-2

|  | Comparative Examples | | | |
| --- | --- | --- | --- | --- |
|  | 4 | 5 | 6 | 3 |
| Production of polymer | Production Example | | | |
|  | 1 | 1 | 2 | 2 |
| Kind of carbon black (CB) [*2] | CB-4 | CB-5 | CB-6 | CB-7 |
| Amount of polymer (g) | 20 | 20 | 25 | 20 |
| Amount of CB (g) | 80 | 80 | 100 | 80 |
| (Amount of CB x specific surface area of CB)/amount of polymer ($m^2$/g) | 376 | 880 | 1480 | 1040 |
| Specific surface area of CB ($m^2$/g) | 94 | 220 | 370 | 260 |
| DBP oil absorption (mL/100 g) | 71 | 110 | 77 | 160 |
| Average particle size of CB-containing particles (nm) | 86 | 110 | 119 | - |
| Ejection reliability | ○ | ○ | × | Not dispersed |
| Image density | 1.09 | 1.35 | 1.11 | |
| Image uniformity | × | ○ | ○ | |
| Bleeding between colors | Δ | × | × | |
| Dryness | ○ | × | × | |
| High lighter-fastness | Δ | × | Δ | |

Note: *2: CB-4: "Regal 330R" available from Cabot Corp.; (specific surface area: 94; DBP oil absorption: 71; volatile content: 1.0)
CB-5: "M880" available from Cabot Corp.; (specific surface area: 220; DBP oil absorption: 110; volatile content: 1.5)
CB-6: "#2600" available from Mitsubishi Chemical Corp.; (specific surface area: 370; DBP oil absorption: 77; volatile content: 1.8)
CB-7: "FW18" available from Degusa AG.; (specific surface area: 260; DBP oil absorption: 160; volatile content: 5.0)

The water-based ink containing the water dispersion for ink-jet printing according to the first preferred embodiment of the present invention satisfies not only a high image density, but also exhibits excellent dryness and high lighter-fastness.

The water-based ink containing the water dispersion for ink-jet printing according to the second preferred embodiment of the present invention is excellent in image uniformity, high lighter-fastness and dryness.

For this reason, the water-based inks according to the first and second preferred embodiments of the present invention can be suitably used in high-speed printing at to be conducted a rate of 80 sheets or more/min by an ink-jet printing method.

**Claims**

1.  A water dispersion for ink-jet printing comprising particles of a water-insoluble polymer containing carbon black which is obtained by dispersing a mixture containing the carbon black and the water-insoluble polymer, wherein the carbon black

    contains volatile components in an amount of 3% by weight or more and has a specific surface area of less than 200 $m^2$/g, and an amount of the water-insoluble polymer, an amount of the carbon black (CB) and the specific surface area of CB satisfy the relationship represented by the following formula (1):

$$\text{(Amount of CB x Specific surface area of CB)/Amount of water-insoluble polymer} \doteqdot 200 \text{ to } 500 \ (m^2/g) \qquad (1).$$

**2.** The water dispersion for ink-jet printing according to claim 1, wherein the carbon black has a specific surface area of 50 $m^2$/g or more.

**3.** The water dispersion for ink-jet printing according to claim 1 or 2, wherein the carbon black has a DBP oil absorption of 40 to 400 mL/100 g.

**4.** A water dispersion for ink-jet printing comprising particles of a water-insoluble polymer containing carbon black which is obtained by dispersing a mixture containing the carbon black and the water insoluble polymer, wherein the carbon black has

a specific surface area of not less than 100 $m^2$/g but less than 200 $m^2$/g, and an amount of the water-insoluble polymer, an amount of the carbon black (CB) and the specific surface area of CB satisfy the relationship represented by the following formula (1):

$$\text{(Amount of CB} \times \text{Specific surface area of CB)/Amount of water-insoluble polymer} = 200 \text{ to } 500 \ (m^2/g) \qquad (1).$$

**5.** The water dispersion for ink-jet printing according to claim 4, wherein the carbon black contains volatile components in an amount of less than 3%.

**6.** The water dispersion for ink-jet printing according to claim 4 or 5, wherein the carbon black has a DBP oil absorption of 80 to 400 mL/100 g.

**7.** The water dispersion for ink-jet printing according to any one of claims 1 to 6, wherein the water-insoluble polymer is a water-insoluble graft polymer containing a constitutional unit derived from a macromer (b).

**8.** The water dispersion for inkjet printing according to any one of claims 1 to 7, wherein the water-insoluble polymer is a water-insoluble vinyl polymer obtained by copolymerizing a monomer mixture containing a salt-forming group-containing monomer (a), the macromer (b) and a hydrophobic monomer (c).

**9.** The water dispersion for ink-jet printing according to claim 8, wherein the hydrophobic monomer (c) is an alkyl (meth) acrylate containing a long-chain alkyl group having 8 to 30 carbon atoms and/or an aromatic ring-containing monomer.

**10.** A water-based ink for ink-jet printing comprising the water dispersion as defined in any one of claims 1 to 8.

**Patentansprüche**

**1.** Wasserdispersion für den Tintenstrahldruck, umfassend Teilchen aus einem wasserunlöslichen Polymer, umfassend Ruß, erhalten durch Dispergieren einer Mischung, umfassend den Ruß und das wasserunlösliche Polymer, worin der Ruß flüchtige Komponenten in einer Menge von 3 Gew.% oder mehr enthält und eine spezifische Oberfläche von weniger als 200 $m^2$/g hat, und worin eine Menge des wasserunlöslichen Polymers, eine Menge des Rußes (CB) und die spezifische Oberfläche von CB die Beziehung mit der folgenden Formel (1) erfüllen:

$$\text{(Menge an CB} \times \text{spezifische Oberfläche von CB)/Menge des wasserunlöslichen Polymers} = 200 \text{ bis } 500 \ (m^2/g).$$

**2.** Wasserdispersion für den Tintenstrahldruck nach Anspruch 1, worin der Ruß eine spezifische Oberfläche von 50 $m^2$/g oder mehr hat.

**3.** Wasserdispersion für den Tintenstrahldruck nach Anspruch 1 oder 2, worin der Ruß eine DBP-Ölabsorption von 40 bis 400 ml/100g hat.

**4.** Wasserdispersion für den Tintenstrahldruck, umfassend Teilchen aus einem wasserunlöslichen Polymer, umfassend Ruß, erhalten durch Dispergieren des Rußes und des wasserunlöslichen Polymers, worin der Ruß eine spezifische Oberfläche von nicht weniger als 100 $m^2/g$, aber weniger als 200 $m^2/g$ hat und die Menge des wasserunlöslichen Polymers, die Menge des Rußes (CB) und die spezifische Oberfläche von CB die durch die folgende Formel (1) gezeigte Beziehung erfüllen:

$$\text{(Menge an CB} \times \text{spezifische Oberfläche von CB)/Menge des wasserunlöslichen Polymers} = 200 \text{ bis } 500 \ (m^2/g).$$

5. Wasserdispersion für den Tintenstrahldruck nach Anspruch 4, worin der Ruß flüchtige Komponenten in einer Menge von weniger als 3% umfasst.

6. Wasserdispersion für den Tintenstrahldruck nach Anspruch 4 oder 5, worin der Ruß eine DBP-Ölabsorption von 80 bis 400 ml/100g hat.

7. Wasserdispersion für den Tintenstrahldruck nach einem der Ansprüche 1 bis 6, worin das wasserunlösliche Polymer ein wasserunlösliches Pfropfpolymer mit einer Konstitutionseinheit ist, die von einem Macromer (b) stammt.

8. Wasserdispersion für den Tintenstrahldruck nach einem der Ansprüche 1 bis 7, worin das wasserunlösliche Polymer ein wasserunlösliches Vinylpolymer ist, erhalten durch Copolymerisation einer Monomermischung, umfassend ein Monomer (a) mit einer salzbildenden Gruppe, das Macromer (b) und ein hydrophobes Monomer (c).

9. Wasserdispersion für den Tintenstrahldruck nach Anspruch 8, worin das hydrophobe Monomer (c) ein Alkyl(meth)acrylat mit einer langkettigen Alkylgruppe mit 8 bis 30 Kohlenstoffatomen und/oder ein Monomer mit einem aromatischen Ring ist.

10. Tinte auf Wasserbasis für den Tintenstrahldruck, umfassend die Wasserdispersion wie in einem der Ansprüche 1 bis 8 definiert.

## Revendications

1. Dispersion aqueuse pour impression à jet d'encre comprenant des particules d'un polymère insoluble dans l'eau contenant du noir de charbon qui est obtenue en dispersant un mélange contenant du noir de charbon et le polymère insoluble dans l'eau, dans laquelle le noir de charbon contient des composants volatils en une quantité de 3 % en poids ou plus et possède une surface spécifique de moins de 200 $m^2/g$, et une quantité du polymère insoluble dans l'eau, une quantité du noir de charbon (CB) et la surface spécifique du CB satisfont la relation représentée par la formule (1) suivants :

$$\text{(Quantité de CB} \times \text{Surface spécifique du CB)/Quantité du polymère insoluble dans l'eau} = 200 \text{ à } 500 \ (m^2/g) \qquad (1)$$

2. Dispersion aqueuse pour impression à jet d'encre selon la revendication 1, dans laquelle le noir de charbon a une surface spécifique de 50 $m^2/g$ ou plus.

3. Dispersion aqueuse pour impression à jet d'encre selon la revendication 1 ou la revendication 2, dans laquelle le noir de charbon a un indice d'absorption d'huile DBP de 40 à 400 ml/100 g.

4. Dispersion aqueuse pour impression à jet d'encre comprenant des particules d'un polymère insoluble dans l'eau contenant du noir de charbon qui est obtenue en dispersant un mélange contenant du noir de charbon et le polymère insoluble dans l'eau, dans laquelle le noir de charbon a une surface spécifique de pas moins de 100 $m^2/g$ mais moins de 200 $m^2/g$, et une quantité du polymère insoluble dans l'eau, une quantité du noir de charbon (CB) et la surface spécifique du CB satisfont la relation représentée par la formule (1) suivants :

$$\text{(Quantité de CB x Surface spécifique du CB)/Quantité du polymère insoluble dans l'eau} = 200 \text{ à } 500 \ (m^2/g) \qquad (1)$$

5. Dispersion aqueuse pour impression à jet d'encre selon la revendication 4, dans laquelle le noir de charbon contient des composants volatils en une quantité de moins de 3 %.

6. Dispersion aqueuse pour impression à jet d'encre selon la revendication 4 ou 5, dans laquelle le noir de charbon a un indice d'absorption d'huile DBP de 80 à 400 ml/100 g.

7. Dispersion aqueuse pour impression à jet d'encre selon l'une quelconque des revendications 1 à 6, dans laquelle le polymère insoluble dans l'eau est un polymère greffon insoluble dans l'eau contenant un motif constitutionnel dérivé d'un macromère (b).

8. Dispersion aqueuse pour impression à jet d'encre selon l'une quelconque des revendications 1 à 7, dans laquelle le polymère insoluble dans l'eau est un polymère de vinyle insoluble dans l'eau obtenu en copolymérisant un mélange de monomères contenant un monomère contenant un groupe formant un sel (a), le macromère (b) et un monomère hydrophobe (c).

9. Dispersion aqueuse pour impression à jet d'encre selon la revendication 8, dans laquelle le monomère hydrophobe (c) est un (méth)acrylate d'alkyle contenant un groupe alkyle à chaîne longue ayant de 8 à 30 atomes de carbones et/ou un monomère contenant un cycle aromatique.

10. Encre à base d'eau pour impression à jet d'encre comprenant la dispersion aqueuse telle que définie dans l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0039226 A
- JP 2004075820 A
- JP 2005042005 A
- JP 2005042098 A
- JP 2003231831 A
- JP 2004076820 A
- JP 2005042006 A
- JP 9286939 A